# EUROPÄISCHE PATENTANMELDUNG

(11) **EP 3 176 424 A1**
(43) Veröffentlichungstag der Anmeldung: **07.06.2017**
(21) Anmeldenummer: 16200145.7
(22) Anmeldetag: 23.11.2016
(51) Int. Cl.: F03B 13/18

(54) **VORRICHTUNG ZUR UMWANDLUNG VON WELLENKRAFT IN ELEKTRISCHE ENERGIE**

(30) Priorität: 02.12.2015 DE 202015106549 U
(71) Anmelder: TETRASAN GmbH Spezialproblemlösungen für Asbestsanierung, Betonsanierung, Denkmalsanierung, 81377 München (DE)
(72) Erfinder: PAPADOPOULOS, Tilemachos-Dimitrios, 80469 München (DE)
(74) Vertreter: Lambacher, Michael

(57) **Zusammenfassung**

Die Erfindung betrifft eine Vorrichtung zur Umwandlung von Wellenkraft in elektrische Energie. Die Vorrichtung umfasst ein Gehäuse (12), in dem eine im Wesentlichen vertikale Durchgangsöffnung (14) ausgebildet ist, ein in der Durchgangsöffnung (14) in Längsrichtung der Durchgangsöffnung (14) linear verschiebbar gelagertes Hubelement (16), an dessen unterem Ende ein Auftriebskörper (30) außerhalb des Gehäuses (12) angebracht ist, Einrichtungen zur Befestigung des Gehäuses (12) an einer schwimmenden Vorrichtung, mehrere an dem Hubelement (16) in dessen Längsrichtung nacheinander angebrachte Permanentmagnete (22), wobei zwei benachbarte Permanentmagnete (22) jeweils gegenpolig zu einander angebracht sind und voneinander durch eine Isolierung (24) getrennt sind, und an dem Gehäuse (12) bezüglich der Längsachse der Durchgangsöffnung (14) radial außerhalb der Permanentmagnete (22) angeordnete Generatorspulen (28).

## Beschreibung

Die Erfindung betrifft eine Vorrichtung zur Umwandlung von Wellenkraft in elektrische Energie.

Zur Umwandlung von Wellenkraft in elektrische Energie werden derzeit unterschiedlichste Techniken verwendet. Es sind Wellenkraftwerke mit pneumatischer Kammer bekannt, bei denen jede Welle das Wasser in kaminartige Betonröhren drückt und das Wasser bei einem Wellental wieder herausgezogen wird. Die Betonröhren münden in Turbinen, die von einem Luftstrom angetrieben werden, der dadurch erzeugt wird, dass die Luft in den Betonröhren durch die sich auf und ab bewegende Wassersäule komprimiert bzw. angesaugt wird.

Es ist auch bekannt, bewegliche Schwimmelemente zu verwenden, die durch Gelenke verbunden werden. In den Gelenken befinden sich Hydraulikzylinder. Durch die Bewegung wird die Arbeitsflüssigkeit durch Röhren mit integrierten Turbinen und Generatoren in Ausgleichszylinder gedrückt.

Es ist auch bekannt, auf absenkbaren Metallplattformen vertikale, bewegliche Metallplatten zu befestigen, die sich durch Strömungen hin und her bewegen. Ein Hydrauliksystem erzeugt in einem angeschlossenen Hydraulikmotor ein Drehmoment und in einem nachgeschalteten Generator wird daraus elektrische Energie erzeugt.

Die bekannten Vorrichtungen zur Umwandlung der Wellenkraft in Energie sind konstruktiv sehr aufwändig und außerdem sind sie ortsfest zu installieren und können nicht je nach Bedarf von einem Ort zum anderen bewegt werden.

Der Erfindung liegt die Aufgabe zugrunde, mit konstruktiv einfachen Mitteln eine Vorrichtung zur Umwandlung von Wellenkraft in elektrische Energie zu schaffen, die mit wenig konstruktivem Aufwand hergestellt werden kann und flexibel bewegbar ist.

Diese Aufgabe wird erfindungsgemäß durch eine Vorrichtung zur Umwandlung von Wellenkraft in elektrische Energie mit den Merkmalen des Anspruchs 1 gelöst. Vorteilhafte Weiterbildungen der erfindungsgemäßen Vorrichtung sind Gegenstand der Ansprüche 2 bis 3.

Eine schwimmende Vorrichtung, an der die erfindungsgemäße Vorrichtung angebracht ist, ist Gegenstand des Anspruchs 4. Eine vorteilhafte Ausbildung in dieser schwimmenden Vorrichtung ist Gegenstand des Anspruchs 5.

Die erfindungsgemäße Vorrichtung ist so ausgestaltet, dass sie nicht ortsfest im Meer angeordnet werden muss. Sie kann an einer schwimmenden Vorrichtung, beispielsweise einem Rumpf eines Schiffes oder an einem Ponton, befestigt werden. Eine solche schwimmende Vorrichtung ist vorzugsweise mit zusätzlichen Einrichtungen zur Erzeugung von Energie, wie z.B. Solarkollektoren oder Windgeneratoren, ausgestattet. Die gesamte schwimmende Vorrichtung kann zu dem Einsatzort schwimmend bewegt werden und sich zusätzlich am Einsatzort beispielsweise an die Windrichtung anpassen.

Die erfindungsgemäße Vorrichtung kann darüber hinaus mit relativ wenig konstruktivem Aufwand hergestellt werden.

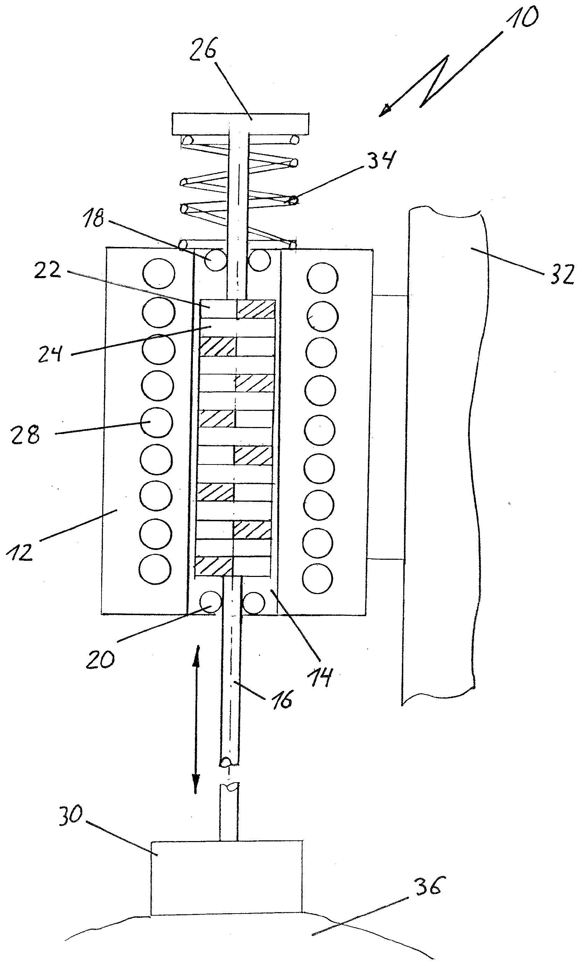

Ein Ausführungsbeispiel der Erfindung ist in der beigefügten Figur näher erläutert, die schematisch im Schnitt eine Vorrichtung zur Umwandlung von Wellenkraft in elektrische Energie zeigt.

Die in der Figur gezeigte Vorrichtung 10 zur Umwandlung von Wellenkraft in elektrische Energie umfasst ein zylindrisches Grundgehäuse 12, durch das eine Durchgangsöffnung 14 in der Figur vertikal und koaxial hindurchgeht, so dass die Durchgangsöffnung 14 in die obere und in die untere Stirnfläche des zylindrischen Grundgehäuses 12 mündet.

Längs der Mittellinie des zylindrischen Grundgehäuses 12 ist ein stangenförmiges Hubelement 16 durch ein oberes Lager 18 und ein unteres Lager 20 in vertikaler Richtung verschiebbar gelagert. Unterhalb des zylindrischen Grundkörpers 12 ist an dem unteren freien Ende des Hubelements 16 ein Auftriebskörper 30 befestigt. An dem oberen Ende des Hubelements 16 ist oberhalb des zylindrischen Grundgehäuses 12 ein Kragen 26 ausgebildet. Eine das Hubelement 16 umgebende Schraubenfeder 34 ist einerseits an dem Kragen 26 und andererseits an der oberen Oberseite des zylindrischen Grundkörpers 12 befestigt. Der zylindrische Grundkörper 12 ist durch Schweißen, Verschrauben, Vernieten oder ähnliche Befestigungstechniken seitlich an dem Rumpf 32 einer schwimmenden Vorrichtung, z.B. eines Schiffes oder eines Pontons, so befestigt, dass die Mittelachse des zylindrischen Grundkörpers 12 im Wesentlichen vertikal verläuft.

Innerhalb der Durchgangsöffnung 14 sind an dem Hubelement 16 mehrere in dessen Längsrichtung nacheinander angebrachte Permanentmagneten 22 angeordnet, die das Hubelement 16 umgeben. Zwei benachbarte Permanentmagnete 22 sind jeweils gegenpolig zueinander angebracht und voneinander durch eine Isolierung 24 getrennt. Innerhalb des zylindrischen Grundgehäuses 12 sind Generatorspulen 28 konzentrisch um die Mittelachse des zylindrischen Grundgehäuses 12 angeordnet.

Der zylindrische Auftriebskörper 30 liegt auf der Wasseroberfläche auf. Wenn sich der Auftriebskörper 30 im Bereich eines Wellenberges 36 befindet, wird das Hubelement 16 durch den Auftriebskörper 30 vertikal nach oben gegen die Kraft der Schraubenfeder 34 bewegt. Dabei werden die Magnete 22 an den Generatorspulen 28 vorbei bewegt und induzieren dort eine elektrische Wechselspannung. Diese elektrische Energie kann beispielsweise auf dem Schiff weiter verarbeitet und anschließend ins Stromnetz eingespeist werden. Die Schraubenfeder 34 übt eine nach unten gerichtete Kraft aus und sorgt so dafür, dass die Hubstange 16 wieder nach unten bewegt wird, wenn der Wellenberg den Bereich des Auftriebskörpers 30 verlässt.

Durch die hier beschriebene Vorrichtung kann die durch Wellenbewegung verursachte Hubbewegung des Auftriebskörpers 30 in elektrische Energie umgewandelt werden. Da der Auftriebskörper 30 über das Hubelement 16 mit den zur Induktion vorgesehenen Permanentmagneten 22 mechanisch gekoppelt ist, wird die lineare Auf- und Abbewegung des Auftriebskörpers 30 direkt auf die zur elektromagnetischen Induktion vorgesehenen Permanentmagneten 22 übertragen, wodurch an den Generatorspulen 28 eine elektrische Spannung induziert wird. Eine vorherige Umwandlung der durch Wellenbewegung verursachten Auf- und Abbewegung in eine entsprechende Rotationsbewegung zur Erzeugung elektrischer Energie ist durch die beschriebene Vorrichtung nicht notwendig. Der Wirkungsgrad der Energieumwandlung kann somit weiter verbessert werden. Ein geringer Wellengang (Seegang) reicht bereits aus, um mit der hier beschriebenen Vorrichtung elektrische Energie erzeugen zu können.

Ferner ist die hier beschriebene Vorrichtung derart ausgebildet, dass sie oberhalb der Wasseroberfläche angeordnet werden kann. Dies erleichtert insbesondere die Installation und Wartung der Vorrichtung im Vergleich zu Vorrichtungen, die im Meer versenkt angeordnet sind.

## Patentansprüche

1. Vorrichtung zur Umwandlung von Wellenkraft in elektrische Energie, mit
- einem Gehäuse (12), in dem eine im Wesentlichen vertikale Durchgangsöffnung (14) ausgebildet ist,
- einem in der Durchgangsöffnung (14) in Längsrichtung der Durchgangsöffnung (14) linear verschiebbar gelagerten Hubelement (16), an dessen unterem Ende ein Auftriebskörper (30) außerhalb des Gehäuses (12) angebracht ist,
- Einrichtungen zur Befestigung des Gehäuses (12) an einer schwimmenden Vorrichtung,
- mehreren an dem Hubelement (16) in dessen Längsrichtung nacheinander angebrachten Permanentmagneten (22), wobei zwei benachbarte Permanentmagnete (22) jeweils gegenpolig zu einander angebracht sind und voneinander durch eine Isolierung (24) getrennt sind, und
- an dem Gehäuse (12) bezüglich der Längsachse der Durchgangsöffnung (14) radial außerhalb der Permanentmagnete (22) angeordneten Generatorspulen (28).

2. Vorrichtung nach Anspruch 1, **gekennzeichnet durch** eine elastische Rückstelleinrichtung (34), deren Federkraft einer Bewegung des Hubelements (16) entgegenwirkt.

3. Vorrichtung nach Anspruch 1 oder 2, **dadurch gekennzeichnet, dass** das Hubelement (16) stangenförmig ist und die Permanentmagnete (22) das Hubelement (16) umgeben.

4. Schwimmende Vorrichtung, an der eine Vorrichtung (10) zur Umwandlung von Wellenkraft in Energie nach einem der vorhergehenden Ansprüche angebracht ist.

5. Schwimmende Vorrichtung nach Anspruch 4, **gekennzeichnet durch** einen Schiffsrumpf (32) oder Ponton, an dem die Vorrichtung (10) zur Umwandlung von Wellenkraft in Energie angebracht ist.
